# EUROPEAN PATENT SPECIFICATION

(11) **EP 3 446 352 B1**
(45) Date of publication and mention of the grant of the patent: **01.07.2020**
(21) Application number: 17716863.0
(22) Date of filing: 10.04.2017
(51) Int. Cl.: H01M 10/04, H01M 10/0585, H01M 2/02, H01M 2/08, H01M 10/0525

(54) **ELECTROCHEMICAL CELL INCLUDING ELECTRODE ISOLATION FRAME**
BATTERIEZELLE MIT ELEKTRODENISOLIERRAHMEN
CELLULE ÉLECTROCHIMIQUE COMPRENANT UNE ARMATURE D'ISOLATION D'ÉLECTRODE

(30) Priority: 18.04.2016 US 201662324030 P
(43) Date of publication of application: 27.02.2019
(73) Proprietor: Robert Bosch GmbH, 70442 Stuttgart (DE)
(72) Inventor: KOTIK, Mark, Rochester Hills Michigan 48309 (US); FRICK, Paul, Wixom Michigan 48393 (US)
(86) International application number: PCT/EP2017/058498
(87) International publication number: WO 2017/182306

(56) References cited:
- JP-A- H10 208 710
- JP-A- S61 230 267
- JP-A- S61 267 259
- JP-A- 2004 349 156
- KR-A- 20100 033 831
- US-A1- 2004 041 537
- US-A1- 2011 091 770
- US-A1- 2012 189 887

## Description

### FIELD

The disclosure relates generally to an electrochemical cell having a single electrode pair arranged in a stacked configuration, and particularly to a plastic frame integrated into the single electrode pair cell which isolates the electrodes from each other.

### BACKGROUND

Battery packs provide power for various technologies ranging from portable electronics to renewable power systems and environmentally friendly vehicles. For example, hybrid electric vehicles (HEV) use a battery pack and an electric motor in conjunction with a combustion engine to increase fuel efficiency. Battery packs are formed of a plurality of battery modules, where each battery module includes several electrochemical cells. Within the battery modules, the cells are arranged in two or three dimensional arrays and are electrically connected in series or in parallel. Likewise, the battery modules within a battery pack are electrically connected in series or in parallel.

JP S61 267259 A describes a battery with a single positive electrode, a single negative electrode and a separator that is disposed between the positive electrode and the negative electrode, wherein the positive electrode, the negative electrode and the separator are arranged in a stacked configuration. An electrically-insulating frame is disposed between portions of the positive electrode and the negative electrode. Moreover, a frame-shaped adhesive layer is arranged between the frame and a terminal plate of the negative electrode and another frame-shaped adhesive layer is arranged between the frame and a terminal plate of the positive electrode.

### SUMMARY

The invention provides an electrochemical cell with the features of claim 1 and a battery module with the features of claim 8. The electrochemical cell may include one or more of the following features: The first sealing portion and the second sealing portion reside entirely within an outer peripheral edge of both the positive electrode and the negative electrode. An opening is provided in the frame between an inner peripheral edge of the frame and an outer peripheral edge of the frame. The frame has a non-uniform cross-sectional thickness. The frame has a T-shaped cross-sectional shape including a first frame portion disposed between the positive electrode and the negative electrode that has a first thickness, and a second frame portion disposed outside a periphery of the positive electrode and the negative electrode that has a second thickness. The second thickness is greater than the first thickness. The frame has a uniform thickness and includes a detent that is shaped and dimensioned to receive a sensor lead. The frame is formed of a film that is electrically isolating. The frame includes reinforcing elements. The frame is thermally conductive. The frame includes features that aid the attachment of sense leads and cell monitoring equipment thereto.

In some aspects, a single electrode pair electrochemical cell includes an anode foil substrate having a first active material pasted on an inward facing side, a cathode foil substrate having a second active material pasted on an inward facing side, a separator sheet disposed between the anode and the cathode, a sealing material such as a hot melt sealant or pressure sensitive adhesive that is disposed along the perimeter of the foils, and an electrolyte sealed between the substrates by the sealing material. The substrates act as an impermeable layer, enclosure and electrodes. Thus, as used herein, the terms "substrate" and "electrode" are interchangeable. The sealing material layer between the electrodes extends around their perimeter to secure the electrodes in place and prevent electrical shorts between the electrodes. In addition, a thin, electrically insulating film frame is embedded into the sealing material layer such that it extends out beyond the perimeter of the electrodes. This frame adds additional isolation beyond that of the adhesive layer by increasing the distance the electrode plates must deform before they can short to the other plate, and shields the electrodes from being shorted by splinters and metal flakes.

This can be compared to some single electrode pair cells in which the adhesive layer extends only to the perimeter of the electrodes and does not defend against creep and deformation of the electrodes, nor against debris or cut edge fragments crossing the gap and shorting the cell.

The details of one or more features, aspects, implementations, and advantages of this disclosure are set forth in the accompanying drawings, the detailed description, and the claims below.

### BRIEF DESCRIPTION OF THE DRAWINGS

Fig. 1 is a cross-sectional view of a battery pack including three battery modules, each battery module including four single electrode pair cells shown in cross-section.
Fig. 2 is a cross-sectional view of one of the single electrode pair cell of Fig. 1, illustrating a thin, electrically insulating film frame embedded into a sealing material layer.
Fig. 3 is a cross-sectional view of a battery module including an alternative embodiment of the single electrode pair cells.
Fig. 4 is a cross-sectional view of one of the alternative embodiment single electrode pair cells of Fig. 3.
Fig. 5 is a cross-sectional view of a battery module including another alternative embodiment of the single electrode pair cells.
Fig. 6 is a cross-sectional view of one of the alternative embodiment single electrode pair cell of Fig. 5.
Fig. 7 is a cross-sectional view of a battery module including another alternative embodiment of the single electrode pair cells.
Fig. 8 is a cross-sectional view of one of the alternative embodiment single electrode pair cell of Fig. 7.
Fig. 9 is a cross-sectional view of a battery module including another alternative embodiment of the single electrode pair cells.
Fig. 10 is a cross-sectional view of one of the alternative embodiment single electrode pair cell of Fig. 9.

### DETAILED DESCRIPTION

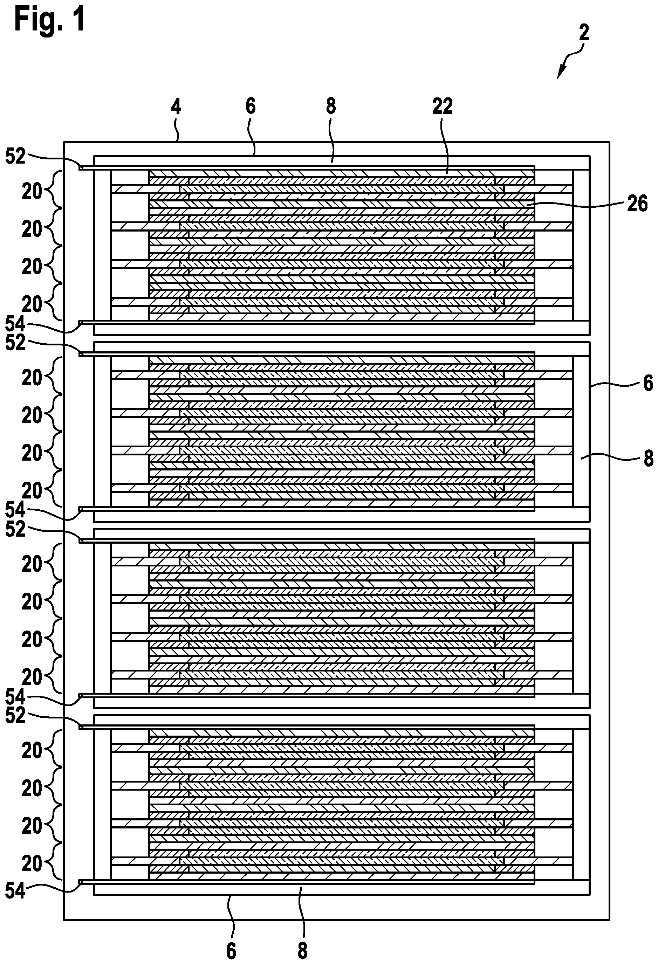

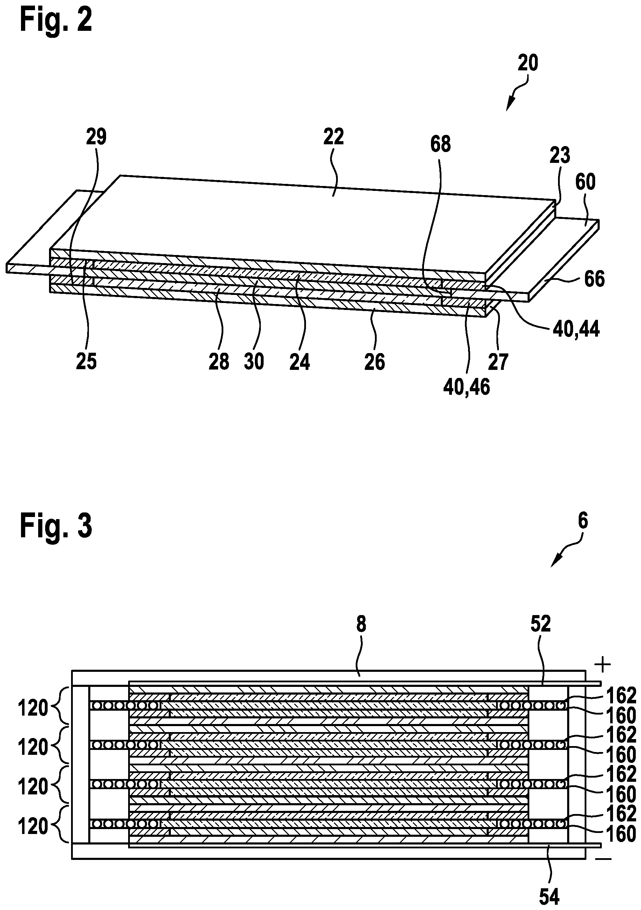

Referring to Figs. 1 and 2, a battery module 6 is a power generation and storage device that includes electrochemical cells 20 that are electrically interconnected and stored in an organized manner within a battery module housing 8. The cells 20 can be arranged within the module housing 8, for example by stacking. The module housing 8 includes a positive (+) bus bar 52, a negative (-) bus bar 54. Within the battery module housing 8, cells 20 are electrically connected in series or in parallel. Several battery modules 6 may be disposed in a battery pack housing 4 to form a battery pack 2, and within the battery pack housing 4, the battery modules 6 are electrically connected in series or in parallel. Each cell 20 has a single electrode pair arranged in a stacked configuration, and an electrically insulating frame 60 integrated into the single electrode pair cell that isolates the electrodes 22, 26 of the cell 20 from each other, as discussed in detail below.

The single layer cell 20 is a lithium ion cell that includes a single positive electrode 22, a single separator 30 and a single negative electrode 26 that are arranged in a layered conductor-separator-conductor configuration. The positive electrode 22 includes first foil substrate formed of a first electrically-conducive material and having a first active material layer 24 disposed on an inward facing side. For example, the positive electrode 22 may be formed of an aluminum foil and include a lithiated metal oxide active material layer 24 disposed on the inward facing side. The first active material layer 24 is spaced apart from the peripheral edge 23 of the positive electrode 22. As a result, a first clear lane 25 is provided along the positive electrode inward facing side along the positive electrode peripheral edge 23. The first clear lane 25 is free of the first active material layer 24. The negative electrode 26 includes second foil substrate formed of a second electrically-conductive material and having a second active material layer 28 disposed on an inward facing side. For example, the negative electrode 26 may be formed of a copper foil and include a graphite active material layer 28 disposed on the inward facing side. The second active material layer 28 is spaced apart from the peripheral edge 27 of the negative electrode 26. As a result, a second clear lane 29 is provided along the negative electrode inward facing side along the negative electrode peripheral edge 27. The second clear lane 29 is free of the active material layer 28.

The cell 20 includes the separator 30 disposed between the positive and negative electrodes 22, 26. In particular, the separator 30 is sized and dimensioned to reside between the active material layers 24, 28 of the positive and negative electrodes, and may only partially protrude between the first and second clear lanes 25, 29. The separator 30 is a permeable membrane that functions to keep the positive and negative electrodes 22, 26 apart to prevent electrical short circuits while also allowing passage of ionic charge carriers provided in the electrolyte and that are needed to close the circuit during the passage of current within the cell 20. The separator 30 is formed of an electrically insulating material such as, for example, a trilayer polypropylene-polyethylene-polypropylene membrane.

A sealing material layer 40 such as a hot melt sealant or pressure sensitive adhesive is disposed along the perimeter 23, 27 of the positive and negative electrodes 22, 26, and an electrolyte is sealed between the positive and negative electrodes 22, 26 by the sealing material layer 40. The sealing material layer 40 is disposed between the substrates which form the positive and negative electrodes 22, 26 within the clear lanes 25, 29 and extends around the perimeter of the electrodes 22, 26. In the illustrated embodiment, the sealing material layer 40 includes a first sealing portion 44 and a second sealing portion 46. The first sealing portion 44 is disposed between the frame 60 and an inward facing side of the positive electrode 22, and the second sealing portion 46 is disposed between the frame 60 and an inward facing side of the negative electrode 26. The frame 60 is secured relative to the positive electrode 22 and the negative electrode 26 by the sealing material portions 44, 46, and the sealing material portions 44, 46 prevent leakage of electrolyte from the cell 20.

Since the cell 20 is formed of a stacked arrangement of the positive and negative electrodes 22, 26 and separator 30, the cell 20 is very thin relative to some conventional cells. As a non-limiting example of cell thickness, in some embodiments, the cell 20 may have a thickness corresponding to a distance between the positive and negative electrode outer surfaces in a range of 0.5 mm to 1.5 mm. In other embodiments, the cell 20 may have a thickness in a range of 0.2 mm to 0.5 mm.

The cell 20 also includes the thin, electrically insulating film frame 60 of uniform thickness that is embedded into the sealing material layer 40. The frame 60 has an inner peripheral edge 68 that surrounds the separator 30 and an outer peripheral edge 66. The inner peripheral edge 68 is sandwiched between the first sealing portion 44 of the sealing material layer 40 and the second sealing portion 46 of the sealing material layer 40, whereby a seal exists between the positive electrode inward facing side and the frame 60, and also between the negative electrode inward facing side and the frame 60. The outer peripheral edge 66 of the frame 60 extends out beyond the peripheral edges 23, 27 of the positive and negative electrodes 22, 26. The frame 60 electrically isolates the peripheral edge of the positive electrode 22 from the peripheral edge of the negative electrode 26, thus preventing electrical short circuiting between the positive and negative electrodes 22, 26.

In some embodiments, the frame 60 is formed of a flexible film that is electrically isolating.

In some embodiments, the frame 60 is formed of plastic. For example, the frame 60 may be formed of a thin plastic film.

In some embodiments, the frame 60 is formed of a thin rigid film that is electrically isolating, where the film is sufficiently thin that the frame outer peripheral edge 66 is not coplanar with the frame inner peripheral edge 68, and resides below it due to the effect of gravity on the outwardly extending portions of the frame 60.

In some embodiments, the frame 60 is formed of a film that is thermally conductive as well as electrically isolating, such that heat can be transferred out of the cell via the perimeter of the frame.

It is understood, however, that the frame 60 is not limited to these constructions. For example, in some embodiments, a non-plastic, electrically non-conductive material may be used to provide the thin film that forms the frame 60. For another example, in some embodiments, an electrically non-conductive material that is not a film may be used to form the frame 60.

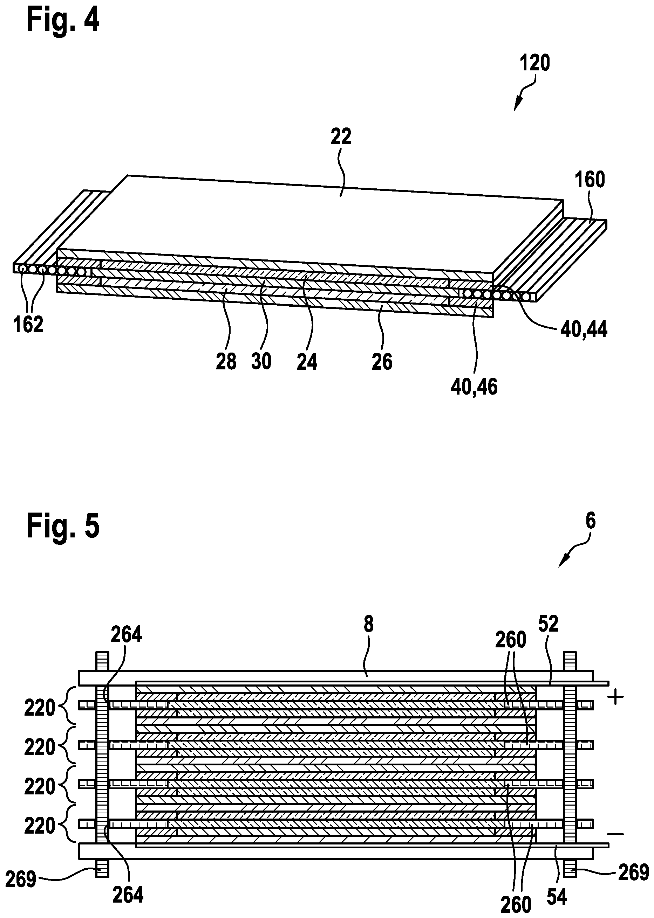

Referring to Figs. 3 and 4, the battery module 6 may include an alternative embodiment cell 120. The cell 120 is similar to the cell 20 described above with respect to Fig. 2, and common reference numbers are used to refer to common elements. The cell 120 differs from the cell 20 of Fig. 2 in that the cell 120 includes an alternative embodiment frame 160 that is formed of a thin film that is rigid and is reinforced to help stabilize the cell and act as a reinforcing structure to aid cell handling. The reinforcement may result from structural features such as providing the film with ribs or embedded rods (not shown), or may result from use of particular materials to form the film for example, a fiber-reinforced material. In the illustrated embodiment, the frame 160 includes reinforcing fibers 162 that extend in parallel to the seal seam.

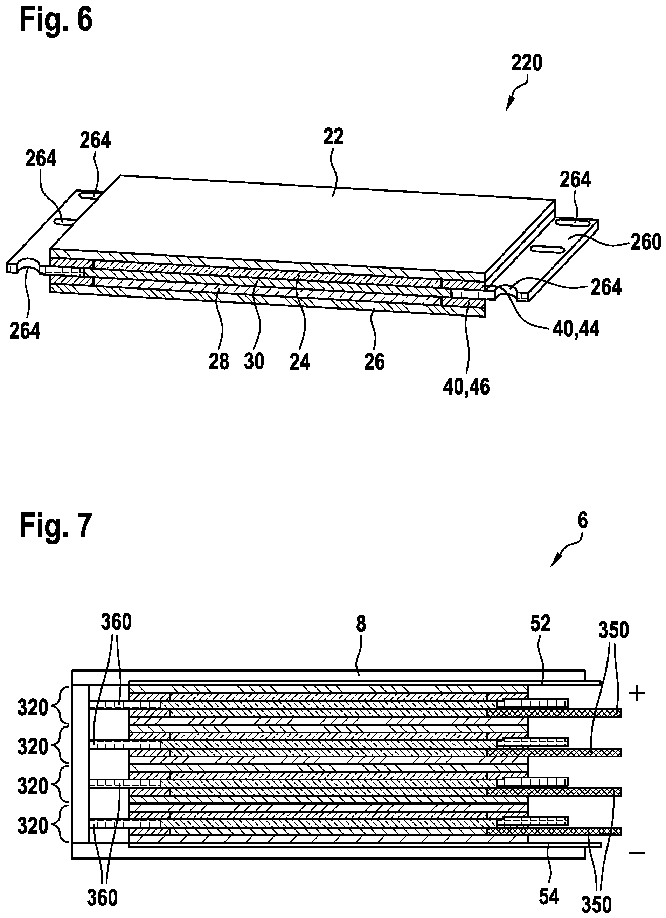

Referring to Figs. 5 and 6, the battery module 6 may include another alternative embodiment cell 220. The cell 220 is similar to the cell 20 described above with respect to Fig. 2, and common reference numbers are used to refer to common elements. The cell 220 differs from the cell 20 of Fig. 2 in that the cell 220 includes an alternative embodiment frame 260. The frame 260 is formed of a film that contains features that aid the attachment of sense leads and cell monitoring equipment to the cell 220. Such features may include, but are not limited to, through openings 264, raised surface features (not shown), depressed surface features (not shown), textures (not shown) and/or materials. In the illustrated embodiment, the through openings 264 are provided outside a peripheral edge of the positive and negative electrodes 22, 26, and each through opening 264 is spaced apart from the adjacent through opening 264.

Alternatively, the through openings 264 may be used to secure the cell 220 within the module housing 8. In the illustrated embodiment, rods 269 extend through the through openings of the cells 220 stacked within the battery module 6, and are fixed at each end to the module housing 8. The rods 269 maintain the cells 220 in a stacked configuration, and prevent relative motion between adjacent cells 220 or between the cells 220 and the module housing 8. In some embodiments, the rods 269 may cooperate with the module housing 8 to apply a compression force to the stacked cells 220 stored therein, ensuring a reliable series electrical connection between adjacent cells 220.

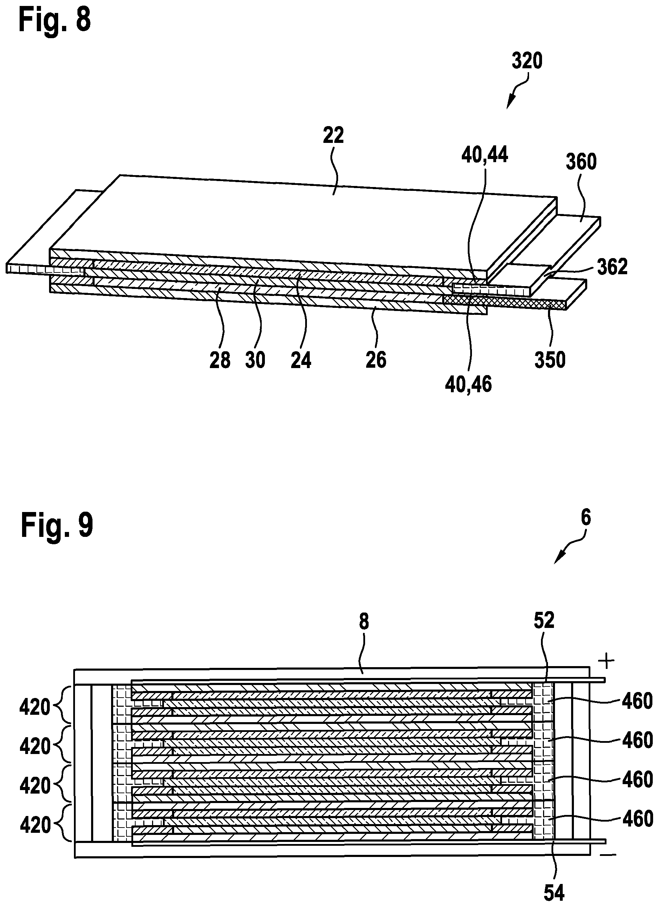

Referring to Figs. 7 and 8, the battery module 6 may include another alternative embodiment cell 320. The cell 320 is similar to the cell 20 described above with respect to Fig. 2, and common reference numbers are used to refer to common elements. The cell 320 differs from the cell 20 of Fig. 2 in that the cell 320 includes sensor leads 350 and an alternative embodiment frame 360 that is configured to accommodate the sensor leads 350. The sensor leads 350 are electrically conductive and are electrically connected to one of the electrodes 22, 26 of the cell 320. For example, in the illustrated embodiment, one end of the sensor lead 350 is electrically connected to an inner surface of the negative electrode 26, and an opposed end (not shown) is electrically connected to a battery management system (BMS, not shown). The sensor leads 350 are configured, for example, to allow detection of cell voltage, temperature, etc., by the BMS.

The frame 360 includes a detent 362 that receives the sensor lead 350 and allows the sensor lead 350 to exit one side of the cell 320. The frame 360 is of uniform thickness, and the detent 362 is an offset portion of the frame that is shaped and dimensioned to conform to the shape and dimensions of the sensor lead 350.

The frame 360 is secured relative to the positive electrode 22 and the negative electrode 26 by the first and second sealing material portions 44, 46, and the sealing material portions 44, 46 prevent leakage of electrolyte from the cell 20. The first sealing portion 44 is disposed between the frame 360 and an inward facing side of the positive electrode 22, and the second sealing portion 46 is disposed between the frame 360 and an inward facing side of the sensor lead 350.

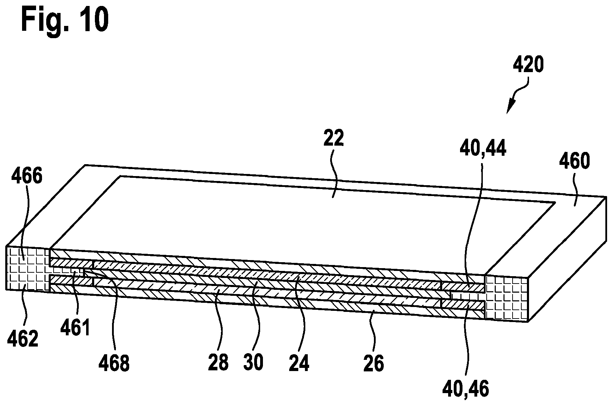

Referring to Figs. 9 and 10, the battery module 6 may include yet another alternative embodiment cell 420. The cell 420 is similar to the cell 20 described above with respect to Fig. 2, and common reference numbers are used to refer to common elements. The cell 420 differs from the cell 20 of Fig. 2 in that the cell 420 includes another alternative embodiment frame 460. The frame 460 has a non-uniform cross-sectional thickness. In particular, the frame 460 has a T-shaped cross-sectional shape including a first frame portion 461 disposed between the positive electrode 22 and the negative electrode 26 and including the frame inner peripheral edge 68 that has a first thickness, and a second frame portion 462 disposed outside a periphery of the positive electrode 22 and the negative electrode 26 and including the frame outer peripheral edge 466 that has a second thickness, where the second thickness is greater than the first thickness. In the illustrated embodiment, the second frame portion 462 has a thickness that corresponds to the overall thickness of the cell 420. By providing a frame 460 having a non-uniform thickness, it is possible to provide a cell 420 that is very thin since the first frame portion 461 that is disposed within the cell 420 is also very thin. In addition, since the external portion of the frame 460, e.g., the frame second portion 462, is relatively thick, the frame 460 can be used more reliably to fasten the cell 420 to the module housing 8. To that end, through openings (not shown) such as described above with respect to Figs. 5 and 6 may be provided in the frame second portion 462.

## Claims

1. An electrochemical cell (20, 120, 220, 320, 420) that comprises
a single positive electrode (22),
a single negative electrode (26),
a separator (30) that is disposed between the positive electrode (22) and the negative electrode (26), wherein the positive electrode (22), the negative electrode (26) and the separator (30) are arranged in a stacked configuration,
an electrically-insulating frame (60, 160, 260, 360, 460) disposed between portions of the positive electrode (22) and the negative electrode (26) so as to isolate the positive electrode (22) and the negative electrode (26), the frame (60, 160, 260, 360, 460) having an inner peripheral edge (68) that surrounds the separator (30) and an outer peripheral edge (66), and
a sealing material layer (40) residing between the positive electrode (22) and the negative electrode (26), the sealing material layer (40) including a first sealing portion (44) and a second sealing portion (46), the first sealing portion (44) disposed between the frame (60, 160, 260, 360, 460) and an inward facing side of the positive electrode (22), and the second sealing portion (46) disposed between the frame (60, 160, 260, 360, 460) and an inward facing side of the negative electrode (26), wherein the frame (60, 160, 260, 360, 460) is secured relative to the positive electrode (22) and the negative electrode (26) by the sealing material layer (40),
**characterized in that**
the outer peripheral edge (66) of the frame (60, 160, 260, 360, 460) protrudes outward relative to a peripheral edge of the positive electrode (22) and the negative electrode (26), and
the inner peripheral edge (68) of the frame (60, 160, 260, 360, 460) is sandwiched between the first sealing portion (44) of the sealing material layer (40) and the second sealing portion (46) of the sealing material layer (40), whereby a seal exists between a positive electrode inward facing side of the positive electrode (22) and the frame (60, 160, 260, 360, 460), and also between a negative electrode inward facing side of the negative electrode (26) and the frame (60, 160, 260, 360, 460).

2. The electrochemical cell (20, 120, 220, 320, 420) of claim 1, wherein the first sealing portion (44) and the second sealing portion (46) reside entirely within an outer peripheral edge of both the positive electrode (22) and the negative electrode (26).

3. The electrochemical cell (220) of claim 1, wherein an opening (264) is provided in the frame (260) between the inner peripheral edge (68) of the frame (260) and the outer peripheral edge (66) of the frame (260).

4. The electrochemical cell (20, 120, 320) of claim 1, wherein the frame (60, 160, 360) has a non-uniform cross-sectional thickness.

5. The electrochemical cell (420) of claim 1, wherein the frame (460) has a T-shaped cross-sectional shape including a first frame portion (461) disposed between the positive electrode (22) and the negative electrode (26) that has a first thickness, and a second frame portion (462) disposed outside a periphery of the positive electrode (22) and the negative electrode (26) that has a second thickness, where the second thickness is greater than the first thickness.

6. The electrochemical cell (20, 120, 220) of claim 1, wherein the frame (60, 160, 260) is formed of a film that is electrically isolating.

7. The electrochemical cell (120) of claim 1, wherein the frame (160) includes reinforcing elements (162).

8. A battery module (6) comprising a plurality of electrically connected cells (20, 120, 220, 320, 420) according to one of claims 1 to 7.

## Patentansprüche

1. Elektrochemische Zelle (20, 120, 220, 320, 420), die Folgendes umfasst
eine einzelne positive Elektrode (22),
eine einzelne negative Elektrode (26),
einen Separator (30), der zwischen der positiven Elektrode (22) und der negativen Elektrode (26) angeordnet ist, wobei die positive Elektrode (22), die negative Elektrode (26) und der Separator (30) in einer gestapelten Konfiguration angeordnet sind,
einen elektrisch isolierenden Rahmen (60, 160, 260, 360, 460), der zwischen Abschnitten der positiven Elektrode (22) und der negativen Elektrode (26) angeordnet ist, um so die positive Elektrode (22) und die negative Elektrode (26) zu isolieren, wobei der Rahmen (60, 160, 260, 360, 460) einen inneren peripheren Rand (68), der den Separator (30) umgibt, und einen äußeren peripheren Rand (66) aufweist, und
eine Dichtungsmaterialschicht (40), die sich zwischen der positiven Elektrode (22) und der negativen Elektrode (26) befindet, wobei die Dichtungsmaterialschicht (40) einen ersten Dichtungsabschnitt (44) und einen zweiten Dichtungsabschnitt (46) umfasst, der erste Dichtungsabschnitt (44) zwischen dem Rahmen (60, 160, 260, 360, 460) und einer nach innen zeigenden Seite der positiven Elektrode (22) angeordnet ist und der zweite Dichtungsabschnitt (46) zwischen dem Rahmen (60, 160, 260, 360, 460) und einer nach innen zeigenden Seite der negativen Elektrode (26) angeordnet ist, wobei der Rahmen (60, 160, 260, 360, 460) in Bezug auf die positive Elektrode (22) und auf die negative Elektrode (26) durch die Dichtungsmaterialschicht (40) befestigt ist,
**dadurch gekennzeichnet, dass**
der äußere periphere Rand (66) des Rahmens (60, 160, 260, 360, 460) nach außen in Bezug auf einen peripheren Rand der positiven Elektrode (22) und der negativen Elektrode (26) vorsteht, und
der innere periphere Rand (68) des Rahmens (60, 160, 260, 360, 460) zwischen dem ersten Dichtungsabschnitt (44) der Dichtungsmaterialschicht (40) und dem zweiten Dichtungsabschnitt (46) der Dichtungsmaterialschicht (40) eingefasst ist, wodurch eine Dichtung zwischen einer nach innen zeigenden positiven Elektrodenseite der positiven Elektrode (22) und dem Rahmen (60, 160, 260, 360, 460) und auch zwischen einer nach innen zeigenden negativen Elektrodenseite der negativen Elektrode (26) und dem Rahmen (60, 160, 260, 360, 460) existiert.

2. Elektrochemische Zelle (20, 120, 220, 320, 420) nach Anspruch 1, wobei sich der erste Dichtungsabschnitt (44) und der zweite Dichtungsabschnitt (46) vollständig innerhalb eines äußeren peripheren Rands sowohl der positiven Elektrode (22) als auch der negativen Elektrode (26) befinden.

3. Elektrochemische Zelle (220) nach Anspruch 1, wobei eine Öffnung (264) in dem Rahmen (260) zwischen dem inneren peripheren Rand (68) des Rahmens (260) und dem äußeren peripheren Rand (66) des Rahmens (260) bereitgestellt ist.

4. Elektrochemische Zelle (20, 120, 320) nach Anspruch 1, wobei der Rahmen (60, 160, 360) eine nicht einheitliche Querschnittsdicke aufweist.

5. Elektrochemische Zelle (420) nach Anspruch 1, wobei der Rahmen (460) eine T-förmige Querschnittsgestalt aufweist, die einen ersten Rahmenteil (461), der zwischen der positiven Elektrode (22) und der negativen Elektrode (26) angeordnet ist und der eine erste Dicke aufweist, und einen zweiten Rahmenteil (462) umfasst, der außerhalb einer Peripherie der positiven Elektrode (22) und der negativen Elektrode (26) angeordnet ist und der eine zweite Dicke aufweist, wobei die zweite Dicke größer ist als die erste Dicke.

6. Elektrochemische Zelle (20, 120, 220) nach Anspruch 1, wobei der Rahmen (60, 160, 260) aus einem Film ausgebildet ist, der elektrisch isolierend ist.

7. Elektrochemische Zelle (120) nach Anspruch 1, wobei der Rahmen (160) Verstärkungselemente (162) umfasst.

8. Batteriemodul (6), mehrere elektrisch verbundene Zellen (20, 120, 220, 320, 420) nach einem der Ansprüche 1 bis 7 umfassend.

## Revendications

1. Cellule électrochimique (20, 120, 220, 320, 420) qui comprend
une seule électrode positive (22),
une seule électrode négative (26),
un séparateur (30) qui est disposé entre l'électrode positive (22) et l'électrode négative (26), l'électrode positive (22), l'électrode négative (26) et le séparateur (30) étant agencés dans une configuration empilée,
un cadre électriquement isolant (60, 160, 260, 360, 460) disposé entre des parties de l'électrode positive (22) et de l'électrode négative (26) de manière à isoler l'électrode positive (22) et l'électrode négative (26), le cadre (60, 160, 260, 360, 460) ayant un bord périphérique interne (68) qui entoure le séparateur (30) et un bord périphérique externe (66), et
une couche de matériau d'étanchéité (40) se situant entre l'électrode positive (22) et l'électrode négative (26), la couche de matériau d'étanchéité (40) comportant une première partie d'étanchéité (44) et une deuxième partie d'étanchéité (46), la première partie d'étanchéité (44) étant disposée entre le cadre (60, 160, 260, 360, 460) et un côté tourné vers l'intérieur de l'électrode positive (22), et la deuxième partie d'étanchéité (46) étant disposée entre le cadre (60, 160, 260, 360, 460) et un côté tourné vers l'intérieur de l'électrode négative (26), le cadre (60, 160, 260, 360, 460) étant fixé par rapport à l'électrode positive (22) et l'électrode négative (26) par la couche de matériau d'étanchéité (40),
**caractérisée en ce que**
le bord périphérique externe (66) du cadre (60, 160, 260, 360, 460) fait saillie vers l'extérieur par rapport à un bord périphérique de l'électrode positive (22) et de l'électrode négative (26), et
le bord périphérique interne (68) du cadre (60, 160, 260, 360, 460) est intercalé entre la première partie d'étanchéité (44) de la couche de matériau d'étanchéité (40) et la deuxième partie d'étanchéité (46) de la couche de matériau d'étanchéité (40), moyennant quoi un joint d'étanchéité existe entre un côté d'électrode positive tourné vers l'intérieur de l'électrode positive (22) et le cadre (60, 160, 260, 360, 460), mais aussi entre un côté d'électrode négative tourné vers l'intérieur de l'électrode négative (26) et le cadre (60, 160, 260, 360, 460).

2. Cellule électrochimique (20, 120, 220, 320, 420) de la revendication 1, dans laquelle la première partie d'étanchéité (44) et la deuxième partie d'étanchéité (46) se situent entièrement à l'intérieur d'un bord périphérique externe à la fois de l'électrode positive (22) et de l'électrode négative (26).

3. Cellule électrochimique (220) de la revendication 1, dans laquelle une ouverture (264) est ménagée dans le cadre (260) entre le bord périphérique interne (68) du cadre (260) et le bord périphérique externe (66) du cadre (260).

4. Cellule électrochimique (20, 120, 320) de la revendication 1, dans laquelle le cadre (60, 160, 360) a une épaisseur de section transversale non uniforme.

5. Cellule électrochimique (420) de la revendication 1, dans laquelle le cadre (460) a une forme de section transversale en T comportant une première partie de cadre (461) disposée entre l'électrode positive (22) et l'électrode négative (26) qui a une première épaisseur, et une deuxième partie de cadre (462) disposée à l'extérieur d'une périphérie de l'électrode positive (22) et de l'électrode négative (26) qui a une deuxième épaisseur, la deuxième épaisseur étant supérieure à la première épaisseur.

6. Cellule électrochimique (20, 120, 220) de la revendication 1, dans laquelle le cadre (60, 160, 260) est constitué d'un film qui est électriquement isolant.

7. Cellule électrochimique (120) de la revendication 1, dans laquelle le cadre (160) comporte des éléments de renforcement (162).

8. Module de batterie (6) comprenant une pluralité de cellules (20, 120, 220, 320, 420) selon une des revendications 1 à 7 reliées électriquement.
